# EUROPÄISCHE PATENTSCHRIFT

(11) **EP 1 863 667 B1**
(45) Veröffentlichungstag und Bekanntmachung des Hinweises auf die Patenterteilung: **19.08.2009**
(21) Anmeldenummer: 06706957.5
(22) Anmeldetag: 15.02.2006
(51) Int. Cl.: B60K 25/02

(54) **ANTRIEBSSTRANG FÜR EINEN KOMPRESSOR UND EINE HYDRAULIKPUMPE**
DRIVE TRAIN FOR A COMPRESSOR AND A HYDRAULIC PUMP
ENSEMBLE TRANSMISSION POUR UN COMPRESSEUR ET UNE POMPE HYDRAULIQUE

(30) Priorität: 22.03.2005 DE 102005013027
(43) Veröffentlichungstag der Anmeldung: 12.12.2007
(73) Patentinhaber: KNORR-BREMSE SYSTEME FÜR NUTZFAHRZEUGE GMBH, 80809 München (DE)
(72) Erfinder: GERUM, Eduard, 83026 Rosenheim (DE)
(74) Vertreter: Mattusch, Gundula
(86) Internationale Anmeldenummer: PCT/EP2006/001353
(87) Internationale Veröffentlichungsnummer: WO 2006/099920

(56) Entgegenhaltungen:
- EP-A- 0 590 808
- WO-A-96/09464
- GB-A- 2 397 138

## Beschreibung

Die Erfindung betrifft einen Antriebsstrang für einen Kompressor und eine Hydraulikpumpe eines Kraftfahrzeuges, das zur Lenkunterstützung eine hydraulische Servolenkung sowie eine elektrische Überlagerungslenkung aufweist, wobei der Kompressor und die Hydraulikpumpe über eine gemeinsame Abtriebswelle eines Kraftfahrzeugantriebsmotors angetrieben werden.

Die Erfindung betrifft weiter ein Verfahren zum Antreiben eines Kompressors und einer Hydraulikpumpe eines Kraftfahrzeuges, das zur Lenkunterstützung eine hydraulische Servolenkung sowie eine elektrische
Überlagerungslenkung aufweist, wobei der Kompressor und die Hydraulikpumpe über eine gemeinsame Abtriebswelle eines Kraftfahrzeugantriebsmotors angetrieben werden.

In modernen Kraftfahrzeugen, insbesondere im Nutzfahrzeugbereich, werden vielfach druckluftbetriebene Systeme eingesetzt. Beispielsweise verwenden die Bremsen, die Luftfederung, das Getriebe, etc. Druckluft als Arbeitsmedium. Bei der Konzeption und Herstellung derartiger Systeme muss neben einer dauerhaften Betriebssicherheit der Systeme der Energiebedarf für die Druckluftbeschaffung möglichst niedrig gehalten werden. Es ist heutzutage üblich, den für die Druckluftbeschaffung eingesetzten Kompressor in Phasen, in denen er keine Druckluft fördert, weiter vom Motor des Kraftfahrzeugs antreiben zu lassen. Die dabei geförderte Luft wird allerdings nicht zur Beschaffung von Druckluft ausgenutzt, sondern in die Umgebungsluft gefördert. Dies verursacht typischerweise eine Verlustleistung von etwa 1 kW.

Ein weiteres, üblicherweise ebenfalls von einem Kraftfahrzeugmotor angetriebenes System ist die hydraulische Servolenkung. Diese reduziert die vom Fahrer aufzubringenden Lenkkräfte im Stand, beim Rangieren oder bei geringen Fahrgeschwindigkeiten des Fahrzeugs. Der Leistungsbedarf einer derartigen Lenkung, auch Servolenkung genannt, liegt bei etwa 1 kW im Leerlauf und beträgt bis zu 8 kW bei hoher Anforderung wie beispielsweise beim Rangieren. Bei den meisten Systemen dieser Art wird die Hydraulikpumpe der Lenkunterstützung mittels eines Durchtriebs am Kompressor angetrieben. Um dem Fahrer neben der reinen Lenkkraftunterstützung weitere Funktionalitäten zu bieten, wurde eine sogenannte Überlagerungslenkung entwickelt. Bei diesem System wird beispielsweise mittels eines Elektromotors und eines Planetengetriebes an der Lenksäule ein zusätzliches Drehmoment dem Handmoment des Fahrers überlagert. Mit dieser Überlagerungslenkung lassen sich in Abhängigkeit vom momentanen Fahrzustand des Fahrzeugs beispielsweise unter Verwendung von Signalen eines elektronischen Stabilitätsprogramms (ESP) Lenkkorrekturen zur Stabilisierung des Fahrzeugs durchführen. Es können auch Funktionen wie eine variable Übersetzung in Abhängigkeit von der Fahrzeuggeschwindigkeit oder von der Lenkgeschwindigkeit sowie eine variable Servounterstützung, die das überlagerte Drehmoment in Abhängigkeit von dem vom Fahrer aufzubringenden Drehmoment aufprägt, realisiert werden.

Der Erfindung liegt die Aufgabe zugrunde, einen
Antriebsstrang nach dem Oberbegriff des Anspruchs 1 derart weiterzubilden, dass ein energieeffizienter Betrieb des Kompressors und der Hydraulikpumpe möglich ist.

Diese Aufgabe wird durch die in den unabhängigen Ansprüchen angegebenen Merkmale gelöst.

Vorteilhafte Weiterbildungen und Ausgestaltungen ergeben sich aus den abhängigen Ansprüchen.

Der erfindungsgemäße Antriebsstrang baut auf dem Stand der Technik dadurch auf, dass Mittel vorgesehen sind, welche die über die Abtriebswelle an den Kompressor und die Hydraulikpumpe abgegebene Leistung verringern, wenn die Anforderungen an den Kompressor und an die Lenkunterstützung dies erlauben. Dies ermöglicht eine weitgehend bedarfsgerechte Abgabe der Leistung an Kompressor und Hydraulikpumpe und vermeidet so einen unnötigen Energieverbrauch. Dabei kann beispielsweise je nach Anforderungsprofil von Kompressor und Hydraulikpumpe die zu übertragende Leistung in mehreren Stufen steuerbar vorgesehen sein, etwa mittels eines Getriebes oder ähnlichem. Dabei ist es auch möglich, gegebenenfalls eine Leistungsreduktion seitens der Antriebswelle durch eine erhöhte Leistungsabgabe durch die Überlagerungslenkung zu kompensieren.

Erfindungsgemäß ist vorgesehen, dass die Mittel die über die Abtriebswelle an den Kompressor und an die Hydraulikpumpe abgegebene Leistung auf Null verringern, wenn ein Betrieb des Kompressors nicht erforderlich ist und die elektrische Überlagerungslenkung die erforderliche Lenkunterstützung alleine aufbringen kann. Insbesondere bei hinreichend hoher Fahrgeschwindigkeit ist in der Regel keine oder nur eine relativ geringe Lenkunterstützung notwendig. Diese kann alleine durch die Überlagerungslenkung aufgebracht werden. Wenn zusätzlich der Kompressor nicht fördern muss, kann der Leistungsfluss über die Abtriebswelle an Kompressor und Hydraulikpumpe unterbrochen werden.

Insbesondere im vorstehend erläuterten Zusammenhang ist vorzugsweise weiterhin vorgesehen, dass die Mittel eine Kupplung umfassen, durch die der Leistungsfluss zu dem Kompressor und zu der Hydraulikpumpe unterbrochen werden kann. Eine derartige Abschaltkupplung stellt eine kostengünstige und robuste Ausführungsform dar, um während geeigneter Betriebszustände Kompressor und Hydraulikpumpe vom Antriebsmotor abzukuppeln. Die Abschaltkupplung kann beispielsweise in Leerförderphasen betätigt werden, in denen der Kompressor gemäß dem Stand der Technik in die Umgebungsluft fördern würde.

Es kann ebenfalls vorteilhaft vorgesehen sein, dass die Mittel eine elektrische Steuerungseinrichtung umfassen, die auf der Grundlage von ihr zugeführten Parameterwerten bestimmt, wie weit die über die Abtriebswelle an den Kompressor und an die Hydraulikpumpe abgegebene Leistung verringert werden kann. Dabei kann eine Steuerung des Leistungsflusses anhand bestimmter Mess- und/oder Stellgrößen erfolgen, die den momentanen und/oder den zu erwartenden Leistungsbedarf von Kompressor und Hydraulikpumpe charakterisieren. Es können auch weitere Betriebsbedingungen des Fahrzeugs wie beispielsweise das momentane Fahrverhalten des Fahrzeugs sowie Parameter der Hydraulik, Pneumatik oder Elektrik berücksichtigt werden.
In diesem Zusammenhang umfasst der Begriff Steuerung auch Regelungsvorgänge.

Insbesondere kann es vorteilhaft sein, dass ein Hydraulikspeicher vorgesehen ist, der gefüllt gehalten wird, um bei plötzlichen Anforderungen an die hydraulische Servolenkung eine ausreichende Lenkunterstützung bereitstellen zu können. Beispielsweise kann für den Fall, dass die Hydraulikpumpe von der Antriebswelle eine verringerte oder keine Leistung erhält, eine Unterbindung der Servounterstützung durch die Hydraulik notwendig sein, um die Servolenkung für einen Notfall betriebsbereit zu halten. In diesem Zusammenhang kann es von Vorteil sein, einen besonders großen Hydraulikspeicher vorzusehen, um den Zeitraum bis zur Aufnahme des Betriebs der Hydraulikpumpe zu überbrücken.

Das erfindungsgemäße Verfahren baut auf dem Stand der Technik dadurch auf, dass die über die Abtriebswelle an den Kompressor und die Hydraulikpumpe abgegebene Leistung verringert wird, wenn die Anforderungen an den Kompressor und die Lenkunterstützung dies erlauben.

Erfindungsgemäß wird die über die Abtriebswelle an den Kompressor und an die Hydraulikpumpe abgegebene Leistung auf Null verringert, wenn ein Betrieb des Kompressors nicht erforderlich ist und die elektrische Überlagerungslenkung die erforderliche Lenkunterstützung alleine aufbringen kann.

Anspruch 6 zeigt eine vorteilhafte Weiterbildung des Verfahrens gemäß dem Anspruch 5.

Der Erfindung liegt die folgende Idee zugrunde: Wenn ein Fahrzeug mit höherer Geschwindigkeit fährt, zum Beispiel auf der Autobahn, ist nur eine geringe Servounterstützung notwendig. Diese kann zum Beispiel alleine von der Überlagerungslenkung übernommen werden. Damit ist es möglich, eine Abschaltkupplung für den Kompressor und damit auch für die Lenkhilfepumpe zu realisieren. Die Abschaltkupplung muss intelligent gesteuert werden. Sie wird betätigt, wenn folgende Bedingungen erfüllt sind:
- Der Kompressor muss nicht fördern.
- Die Anforderung an die Servounterstützung durch die Lenkung ist gering, was zum Beispiel durch den Druck im Hydrauliksystem und durch die Geschwindigkeit des Fahrzeugs ermittelt wird.
- Unterbindung der Servounterstützung durch die Hydraulik, um den Hydraulikspeicher für den Notfall gefüllt zu halten, mittels einer geeigneten Abschalteinrichtung.

Ferner wird vorgeschlagen, den Hydraulikspeicher zu vergrößern, um den Zeitraum zum Einschalten der Kupplung sicher überbrücken zu können.

Die Erfindung wird nun mit Bezug auf die begleitenden Zeichnungen anhand bevorzugter Ausführungsformen beispielhaft erläutert.

Dabei zeigen:
- Figur: 1 ein Blockschaltbild einer Ausführungsform des erfindungsgemäßen Antriebsstrangs; und

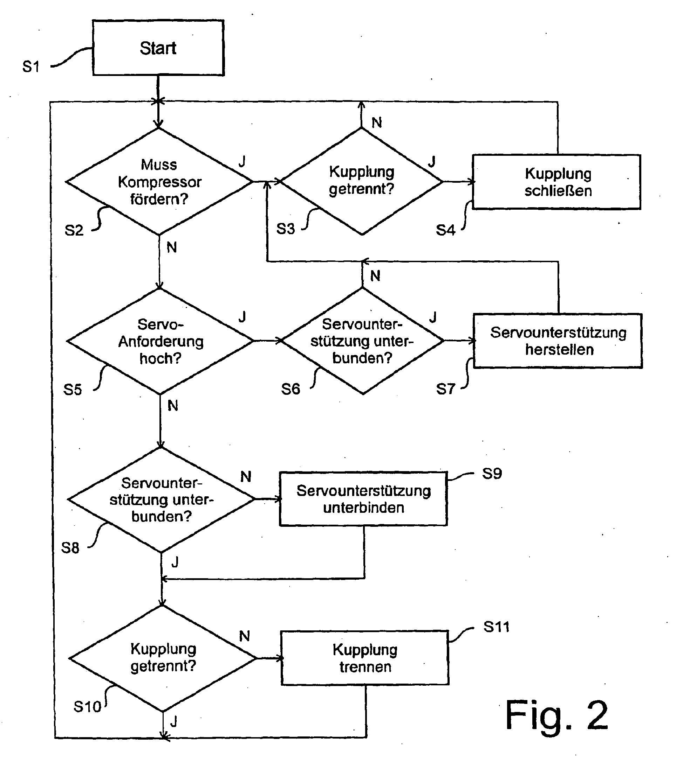

- Figur 2: ein Flussdiagramm zur Erläuterung einer Ausführungsform des erfindungsgemäßen Verfahrens.

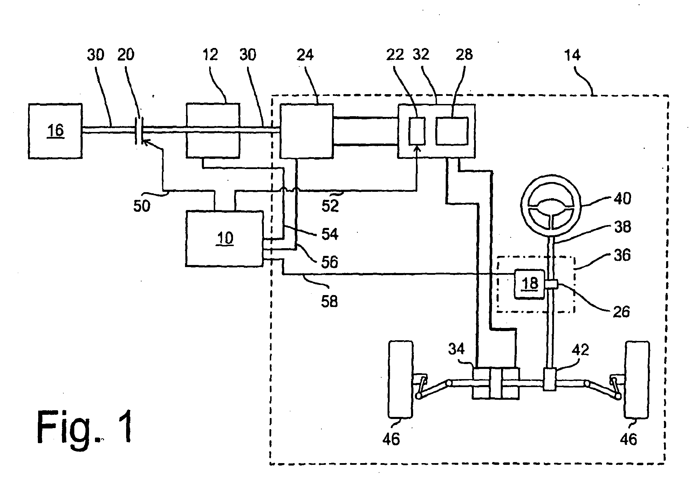

Figur 1 zeigt ein Blockschaltbild einer Ausführungsform des erfindungsgemäßen Antriebsstrangs. Das Blockschaltbild gibt dabei in schematischer Weise Komponenten einer Lenkunterstützung wieder, die eine hydraulische Servolenkung 14 und eine elektrische Überlagerungslenkung 36 umfasst. Des Weiteren sind ein Druckluftkompressor 12 als Teil eines nicht gezeigten Druckluftsystems sowie ein Verbrennungskraftmotor 16 eines Kraftfahrzeugs gezeigt. Die Darstellung beschränkt sich hier auf die für die Beschreibung der Erfindung notwendigen Komponenten. Der Verbrennungsmotor 16 ist über eine Abtriebswelle 30 mit dem Druckluftkompressor 12 und der Hydraulikpumpe 24 verbunden. Die Abtriebswelle 30 ist zwischen Verbrennungsmotor 16 und Kompressor 12 mit einer Abschaltkupplung 20 versehen. Die Hydraulikpumpe 24 ist an einem Durchtrieb des Kompressors 12 angekoppelt und ist Teil einer hydraulischen Servolenkung 14. Die Servolenkung 14 umfasst weiterhin Hydraulikkomponenten 32, die unter anderem einen Hydraulikspeicher 28 und eine Abschalteinrichtung 22 beinhalten, sowie einen Hydraulikaktuator 34. Des Weiteren umfasst die Lenkunterstützung eine Überlagerungslenkung 36. Diese umfasst unter anderem einen Elektromotor 18, der über ein Planetengetriebe 26 mit der Lenksäule 38 verbunden ist. Die Lenksäule 38 ist mit einem Lenkrad 40 sowie einem Lenkgetriebe 42 verbunden, welches wiederum über eine Stangen-Hebel-Anordnung mit den Rädern 46 verbunden ist. Des Weiteren ist eine Steuerung 10 vorgesehen. Diese ist über Steuerleitungen 50, 52 mit der Abschaltkupplung 20 und der Abschalteinrichtung 22 verbunden. Zusätzlich bestehen Signalleitungen 54-58 zwischen der Steuerung 10 und dem Kompressor 12, der Hydraulikpumpe 24 sowie dem Elektromotor 18.

Zunächst soll kurz die Funktionalität der Servolenkung 14 erläutert werden. Die Hydraulikpumpe 24 erzeugt den im Hydrauliksystem benötigten Druck. Mittels der Abschalteinrichtung 22 kann eine Servounterstützung für die Lenkung unterbunden werden und so im Falle eines Stillstandes der Hydraulikpumpe 24 der Druck im Hydrauliksystem konstant gehalten werden. Die Hydraulikkomponenten 32 stellen die für die Funktionalität des Hydrauliksystems notwendigen Bauteile, wie Ventile, Regler, etc. bereit. Der Hydraulikspeicher 28 ist so dimensioniert, dass er den bis zum Anlaufen der Hydraulikpumpe 24 benötigten Zeitraum überbrückt, um bei einer plötzlichen hohen Leistungsanforderung an das Hydrauliksystem ausreichend Druck bereitzustellen.

Der Gesamtbetrieb der Anordnung gestaltet sich wie folgt: Der Verbrennungsmotor 16 treibt bei geschlossener Abschaltkupplung 20 den Kompressor 12 und die Hydraulikpumpe 24 an. Die Steuerung 10 ermittelt unter anderem über die Signalleitungen 54-58 und gegebenenfalls über andere, hier nicht dargestellte Informationsleitungen sowie über die Steuerleitungen 50, 52 den momentanen Zustand des Systems. Ermittelt die Steuerung 10, dass der Kompressor 12 momentan keine Druckluft zu fördern braucht, überprüft sie das momentane Anforderungsprofil an die hydraulischen Servolenkung 14. Ergibt sich daraus, dass zu erwarten ist, dass das vom System geforderte Drehmoment so gering ist, das es alleine von der Überlagerungslenkung 36 aufgebracht werden kann, schließt die Steuerung 10 die Abschalteinrichtung 22 über die Signalleitung 52 und unterbindet damit eine Servounterstützung durch die Hydraulik. Dann trennt die Steuerung 10 mittels der Steuerleitung 50 die Abschaltkupplung 20 und unterbricht damit den Kraftfluss vom Verbrennungskraftmotor 16 zum Kompressor 12 und zur Hydraulikpumpe 24. In diesem Betriebszustand verbrauchen der Kompressor 12 und die Hydraulikpumpe 24 im Wesentlichen keine Leistung des Verbrennungsmotors 16. Eine eventuelle Lenkunterstützung wird dann durch die elektrische Überlagerungslenkung 36 zur Verfügung gestellt. Sollte sich ergeben, dass entweder ein erhöhtes, vom Elektromotor 18 nicht aufzubringendes Drehmoment angefordert wird oder der Kompressor 12 fördern muss, schließt die Steuerung 10 über die Steuerleitung 50 die Abschaltkupplung 20 und versorgt damit den Kompressor 12 und die Hydraulikpumpe 24 wieder mit Leistung. Zusätzlich aktiviert die Steuerung 10 über die Steuerleitung 52 und die Abschalteinrichtung 22 die hydraulische Servolenkung.

Figur 2 zeigt ein Flussdiagramm zur Erläuterung einer Ausführungsform des erfindungsgemäßen Verfahrens. Das Verfahren beginnt mit Schritt S1. In Schritt S2 wird das momentane Anforderungsprofil an den Kompressor überprüft. Wird dabei festgestellt, dass der Kompressor fördern muss, wird mit Schritt S3 überprüft, ob die den Kompressor mit dem Antrieb verbindende Kupplung getrennt ist. Sollte diese getrennt sein, wird sie mit Schritt S4 geschlossen und es wird zum Ausgangspunkt des Verfahrens zurückgekehrt. Im Falle einer bereits geschlossenen Kupplung in Schritt S3 wird das Verfahren ebenfalls erneut gestartet. Wird dagegen in Schritt S2 festgestellt, dass der Kompressor abgeschaltet werden kann, wird in Schritt S5 das Anforderungsprofil an die hydraulische Servolenkung überprüft. Sollte dieses ein Abschalten des Systems nicht erlauben, wird mit Schritt S6 überprüft, ob die hydraulische Servounterstützung momentan unterbunden ist. Sollte dies der Fall sein, wird in Schritt S7 die hydraulische Unterstützung aktiviert und mit Schritt S3 des Verfahrens fortgefahren. Sollte die hydraulische Unterstützung bereits aktiv sein, wird sofort mit Schritt S3 fortgefahren. Im Falle eines ein Abschalten des system erlaubenden Servolenkungsprofils setzt sich das Verfahren in Schritt S8 fort. Dort wird nochmals, wie in Schritt S6 überprüft, ob die Servounterstützung unterbunden ist. Sollte dies nicht der Fall sein, wird in Schritt S9 diese Unterbindung vollzogen. Danach setzt sich das Verfahren mit Schritt S10 fort. Es wird dort überprüft, ob sich die Abschaltkupplung im Trennzustand befindet. Im Falle eines negativen Prüfungsergebnisses wird die Kupplung im Schritt S11 geöffnet. Anschließend setzt sich das Verfahren mit einer geöffneten Kupplung am Startpunkt S1 fort.

Die in der vorstehenden Beschreibung, in den Zeichnungen, sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuerung
- 12: Kompressor
- 14: Lenkunterstützung
- 16: Verbrennungsmotor
- 18: Elektromotor
- 20: Abschaltkupplung
- 22: Abschalteinrichtung
- 24: Hydraulikpumpe
- 26: Planetengetriebe
- 28: Hydraulikspeicher
- 30: Antriebswelle
- 32: Hydraulikkomponenten
- 34: Hydraulikaktuator
- 36: Überlagerungslenkung
- 38: Lenksäule
- 40: Lenkrad
- 42: Lenkgetriebe
- 46: Räder
- 50, 52: Steuerleitungen
- 54-58: Signalleitungen

## Patentansprüche

1. Antriebsstrang für einen Kompressor (12) und eine Hydraulikpumpe (24) eines Kraftfahrzeuges, das zur Lenkunterstützung eine hydraulische Servolenkung (14) sowie eine elektrische Überlagerungslenkung (36) aufweist, wobei der Kompressor (12) und die Hydraulikpumpe (24) über eine gemeinsame Abtriebswelle (30) eines Kraftahrzeugantriebsmotors (16) angetrieben werden, **dadurch gekennzeichnet, dass** Mittel (10, 20) vorgesehen sind, welche die über die Abtriebswelle (30) an den Kompressor (12) und die Hydraulikpumpe (24) abgegebene Leistung verringern, wenn die Anforderungen an den Kompressor (12) und an die Lenkunterstützung (36) dies erlauben, und welche die über die Abtriebswelle (30) an den Kompressor (12) und an die Hydraulikpumpe (24) abgegebene Leistung auf Null verringern, wenn ein Betrieb des Kompressors (12) nicht erforderlich ist und die elektrische Überlagerungslenkung (36) die erforderliche Lenkunterstützung alleine aufbringen kann.

2. Antriebsstrang nach Anspruch 1, **dadurch gekennzeichnet, dass** die Mittel eine Kupplung (20) umfassen, durch die der Leistungsfluss zu dem Kompressor (12) und zu der Hydraulikpumpe (24) unterbrochen werden kann.

3. Antriebsstrang nach einem der vorhergehenden Ansprüche, **dadurch gekennzeichnet, dass** die Mittel eine elektrische Steuerungseinrichtung (10) umfassen, die auf der Grundlage von ihr zugeführten Parameterwerten bestimmt, wie weit die über die Abtriebswelle (30) an den Kompressor (12) und an die Hydraulikpumpe (24) abgegebene Leistung verringert werden kann .

4. Antriebsstrang nach Anspruch 3, **dadurch gekennzeichnet, dass** ein Hydraulikspeicher (28) vorgesehen ist, der gefüllt gehalten wird, um bei plötzlichen Anforderungen an die hydraulische Servolenkung (14) eine ausreichende Lenkunterstützung bereitstellen zu können.

5. Verfahren zum Antreiben eines Kompressors (12) und einer Hydraulikpumpe (24) eines Kraftfahrzeuges, das zur Lenkunterstützung eine hydraulische Servolenkung (14) sowie eine elektrische Überlagerungslenkung (36) aufweist, wobei der Kompressor (12) und die Hydraulikpumpe (24) über eine gemeinsame Abtriebswelle (30) eines Krattfahrzeugantriebsmotors angetrieben werden, **dadurch gekennzeichnet, dass** die über die Abtriebswelle (30) an den Kompressor (12) und die Hydraulikpumpe (24) abgegebene Leistung verringert wird, wenn die Anforderungen an den Kompressor (12) und die Lenkunterstützung dies erlauben, und die über die Abtriebswelle (30) an den Kompressor (12) und an die Hydraulikpumpe (24) abgegebene Leistung auf Null verringert wird, wenn ein Betrieb des Kompressors (12) nicht erforderlich ist und die elektrische Überlagerungslenkung (36) die erforderliche Lenkunterstützung alleine aufbringen kann.

6. Verfahren nach einem der Ansprüch 5, **dadurch gekennzeichnet, dass** auf der Grundlage von geeigneten Parameterwerten bestimmt wird, wie weit die über die Abtriebswelle (30) an den Kompressor (12) und an die Hydraulikpumpe (24) abgegebene Leistung verringert werden kann.

## Claims

1. A drive train for a compressor (12) and a hydraulic pump (24) of a motor vehicle which has a hydraulic power steering system (14) and an electric superimposed steering system (36) for providing steering assistance, wherein the compressor (12) and the hydraulic pump (24) are driven by means of a common output shaft (30) of a motor vehicle drive motor (16), **characterized in that** means (10, 20) are provided which reduce the power which is output to the compressor (12) and the hydraulic pump (24) via the output shaft (30) if the demands which are being made of the compressor (12) and of the steering assistance system (36) permit it and which reduce the power which is output to the compressor (12) and to the hydraulic pump (24) via the output shaft (30) to zero if it is not necessary for the compressor (12) to operate and the electric superimposed steering system (36) can provide the necessary steering assistance alone.

2. The drive train as claimed in claim 1, **characterized in that** the means comprise a clutch (20) by means of which the power flux to the compressor (12) and to the hydraulic pump (24) can be interrupted.

3. The drive train as claimed in one of the preceding claims, **characterized in that** the means comprise an electric control device (10) which determines, on the basis of parameter values fed to it, how far the power which is output to the compressor (12) and to the hydraulic pump (24) via the output shaft (30) can be reduced.

4. The drive train as claimed in claim 3, **characterized in that** a hydraulic accumulator (28) is provided which is kept filled in order to be able to make available sufficient steering assistance when demands are suddenly made of the hydraulic power steering system (14).

5. A method for operating a compressor (12) and a hydraulic pump (24) of a motor vehicle which has a hydraulic power steering system (14) and an electric superimposed steering system (36) for providing steering assistance, wherein the compressor (12) and the hydraulic pump (24) are driven by means of a common output shaft (30) of a motor vehicle drive motor, **characterized in that** the power which is output to the compressor (12) and the hydraulic pump (24) via the output shaft (30) is reduced if the demands which are being made of the compressor (12) and the steering assistance system permit it and the power which is output to the compressor (12) and to the hydraulic pump (24) via the output shaft (30) is reduced to zero if it is not necessary for the compressor (12) to operate and the electric superimposed steering system (36) can provide the necessary steering assistance alone.

6. A method as claimed in claim 5, **characterized in that** the degree to which the power which is output to the compressor (12) and to the hydraulic pump (24) via the output shaft (30) can be reduced is determined on the basis of suitable parameter values.

## Revendications

1. Ensemble d'entraînement pour un compresseur (12) et une pompe hydraulique (24) d'un véhicule automobile, qui comprend un système de direction assistée hydraulique (14) ainsi qu'un système de direction surimprimé électrique (36) pour l'assistance en renvoi de direction, dans lequel ledit compresseur (12) et ladite pompe hydraulique (24) sont commandés via un arbre de sortie commun (30) d'un moteur d'entraînement (16), **caractérisé en ce que** des moyens (10, 20) sont disposés, qui réduisent la puissance débitée via ledit arbre de sortie (30) audit compresseur (12) et à ladite pompe hydraulique (24), quand les demandes audit compresseur (12) et audit système (36) d'assistance en renvoi de direction ce permettent, et qui réduisent la puissance débitée via ledit arbre de sortie (30) audit compresseur (12) et à ladite pompe hydraulique (24) au niveau zéro, quand un service dudit compresseur (12) n'est pas requis et ledit système de direction surimprimé électrique (36) est capable tout seul de fournir l'assistance en renvoi de direction requise.

2. Ensemble d'entraînement selon la revendication 1, **caractérisé en ce que** lesdits moyens comprennent un embrayage (20) permettant une interruption de la course de puissance vers ledit compresseur (12) et ladite pompe hydraulique.

3. Ensemble d'entraînement selon une quelconque des revendications précédentes, **caractérisé en ce que** lesdits moyens comprennent un moyen de commande électrique (10) qui établit, sur la base des valeurs paramétriques lui fournies, l'étendue de la gamme de réduction possible de la puissance débitée via ledit arbre de sortie (30) audit compresseur (12) et à ladite pompe hydraulique (24).

4. Ensemble d'entraînement selon la revendication 3, **caractérisé en ce qu'**un accumulateur hydraulique (28) est disposé, qui est retenue en un état rempli afin de permettre une assistance suffisante en renvoi de direction au cas des demandes brusques audit système de direction assistée hydraulique (14).

5. Procédé à entraîner un compresseur (12) et une pompe hydraulique (24) d'un véhicule automobile, qui comprend un système de direction assistée hydraulique (14) ainsi qu'un système de direction surimprimé électrique (36) pour l'assistance en renvoi de direction, dans lequel ledit compresseur (12) et ladite pompe hydraulique (24) sont commandés via un arbre de sortie commun (30) d'un moteur d'entraînement (16), **caractérisé en ce que** la puissance débitée via ledit arbre de sortie (30) audit compresseur (12) et à ladite pompe hydraulique (24) est réduite, quand les demandes audit compresseur (12) et audit système (36) d'assistance en renvoi de direction ce permettent, et dans lequel la puissance débitée via ledit arbre de sortie (30) audit compresseur (12) et à ladite pompe hydraulique (24) est réduite au niveau zéro, quand un service dudit compresseur (12) n'est pas requis et ledit système de direction surimprimé électrique (36) est capable tout seul de fournir l'assistance en renvoi de direction requise.

6. Procédé selon la revendication 5, **caractérisé en ce qu'**on établit, sur la base des valeurs paramétriques appropriées, l'étendue de la gamme de réduction possible de la puissance débitée via ledit arbre de sortie (30) audit compresseur (12) et à ladite pompe hydraulique (24).
